Europäisches Patentamt

European Patent Office

Office européen des brevets

(11) Publication number: **0 361 816**
**A2**

# EUROPEAN PATENT APPLICATION

(21) Application number: 89309704.8

(22) Date of filing: 22.09.89

(51) Int. Cl.⁵: **B23D 15/06** , //B23D31/00

(30) Priority: 24.09.88 GB 8822505

(43) Date of publication of application:
**04.04.90 Bulletin 90/14**

(84) Designated Contracting States:
**BE DE ES FR GB GR IT LU NL**

(71) Applicant: **BORE STEEL GROUP LIMITED**
**Bescot Crescent Bescot**
**Walsall West Midlands WS1 4NP(GB)**

(72) Inventor: **Butler, William**
**3 Richmond Gardens Wombourne**
**Wolverhampton WV5 OLQ(GB)**

(74) Representative: **Skinner, Michael Paul et al**
**c/o Swindell & Pearson 48 Friar Gate**
**Derby DE1 1GY(GB)**

(54) Cutting blanks from strip material.

(57) Trapezium shaped blanks 46 are produced by cutting two strips 12A, 12B side by side. The strips 12A, 12B are formed by an elongate cut along a wider strip 12.

The strips are moved to align first paths 40, and a swinging shear cuts along the aligned paths to form first sides 36. The strips 12 are then moved relative to each other and to the cutting station 34 to bring second paths 42 into line at the cutting station. The shear is swung to cut along the aligned paths to from second sides 38. The whole cycle is then repeated.

EP 0 361 816 A2

## Cutting Blanks From Strip Material

The present invention relates to the cutting of blanks from strip material, and in particular, to the cutting of trapezium-shaped blanks from strip material.

The term "trapezium" is used hereinafter to refer to any four-sided, plane figure having two sides which are parallel. Thus, the term covers squares and rectangles as well as non rectilinear figures.

Trapezium-shaped steel blanks cut from steel strip are used, for instance, for pressing to form panels for motor vehicle bodies. A previous proposal uses a swinging shear to cut blanks off the end of the strip. The sides of the strip form the parallel sides of the trapezium and the other two sides are formed by the cuts.

It is an object of the present invention to allow blanks to be cut at a rate which is higher than is possible in accordance with this prior proposal.

According to the invention, there is provided a method of cutting trapezium-shaped blanks from strip material, each blank having two parallel sides formed by the edges of the strip, and first and second cut sides formed by cuts made across the strip at a side-cutting station, wherein two strips are positioned side by side for simultaneous cutting by repeatedly executing operations in which the strips are moved relative to one another and to the side-cutting station to align the paths of first cut sides on the strips and to locate the aligned paths at the side-cutting stations, the two strips are cut along the aligned paths, the strips are moved relative to one another and to the side-cutting station to align the paths of second cut sides on the strips and to locate the aligned paths at the side-cutting station, and the strips are cut along the aligned paths.

Preferably the cutting operations are performed by means of a shear. The shear may be a swinging shear used alternately in a position in which it is parallel to the paths of the first cut sides on the strips and a position in which it is parallel to the paths of the second cut sides on the strips.

The first and second cut sides may not be parallel. The first and second cut sides may not be perpendicular to the edges of the strip.

The movement of the strips is preferably controlled by means of a computer.

Preferably the strips are formed by cutting a single strip along its length. The single strip is preferably cut along its length at a second cutting station upstream of the side-cutting station. The strips are preferably fed from the second cutting station to the side-cutting station through a region in which the strips may hang in loops, the relative sizes of the loops being variable to accommodate relative movement between the strips at the side-cutting station.

Preferably two strips are cut side by side at the side-cutting station.

Preferably the strip of material is steel strip.

The invention also provides apparatus for cutting trapezium-shaped blanks from strip material, each blank having two parallel sides formed by edges of the strip, and first and second cut sides formed by cuts made across the strip at a side-cutting station, the apparatus comprising positioning means operable to move the strips relative to one another and to the side-cutting station, cutting means located at the side-cutting station and operable to cut across the strips simultaneously, and control means operable to control the cutting and the positioning means to cause the blanks to be cut by the repeated execution of a sequence of operations in which the strips are moved relative to one another and to the side-cutting station to align the paths of first cut sides on the strips and to locate the aligned paths at the side-cutting station, the two strips are cut along the aligned paths, the strips are moved relative to one another and to the side-cutting station to align the paths of second cut sides on the strips and to locate the aligned paths at the side-cutting station, and the two strips are cut along the aligned paths.

Preferably the cutting means comprises a shear. The shear is preferably a swinging shear, the control means causing the shear to cut alternately in a position in which it is parallel to the path of the first cut sides on the strips and a position in which it is parallel to the paths along the second cut sides on the strip.

The first and second cut sides may not be parallel. The first and second cut sides may not be perpendicular to the edges of the strip.

The control means preferably comprises a computer.

Preferably the apparatus further comprises second cutting means for forming the strips by cutting a single strip along its length. The second cutting means are preferably located at a second cutting station upstream of the side-cutting station. The apparatus preferably further comprises a region located between the second cutting station and the side-cutting station and in which the strips may hang in loops, the relative sizes of the loops being variable to accommodate relative movement between the strips at the side-cutting station.

Preferably the cutting means cuts two strips side by side. Preferably the strip material is steel strip.

One embodiment of apparatus according to the present invention, and the method in which it is used to cut blanks will now be described in more detail, by way of example only, and with reference to the accompanying drawings, in which:

Fig. 1 is a schematic plan view of the apparatus;

Fig. 2 is a schematic elevation of the apparatus; and

Fig. 3 is a highly schematic diagram indicating the sequence of operations executed by the apparatus of Figs. 1 and 2 in accordance with the invention.

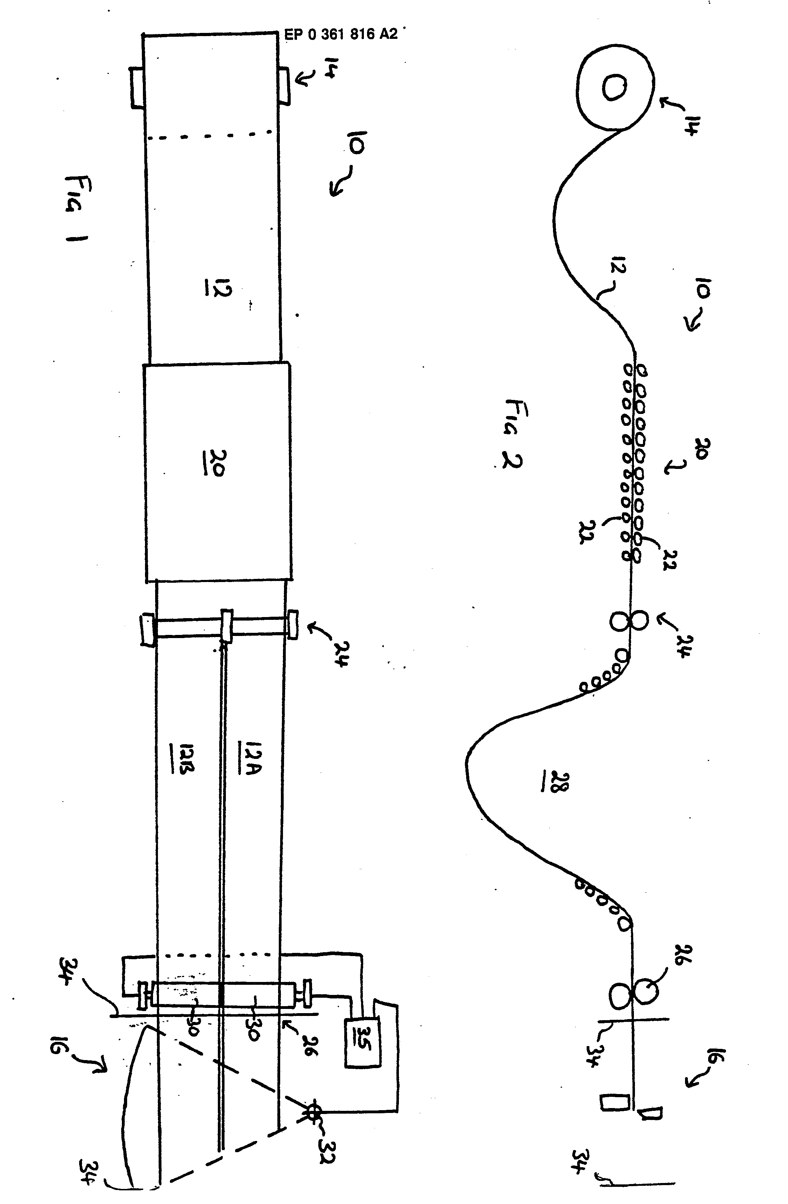

The apparatus 10 shown in Figs. 1 and 2 serves to decoil steel strip 12 from a coil at 14 and to supply the strip to a shear 16 for cutting into trapezium-shaped blanks which are carried away on a conveyor 18 (not shown).

The de-coiled strip 12 is drawn from the coil 14 to a flattening station 20 in which the strip passes between two banks of rollers 22 to remove the curvature adopted by the strip as a result of being coiled.

Following the flattening station 20, the strip 12 passes through a second cutting station 24 (the first, or principal cutting station being at the shear 16). The main function of the second cutting station 24 is to cut lengthwise along the strip to divide the strip into two strips 12A, 12B of equal width. Additional cutting means may be incorporated in the second cutting station 24 to trim or dress the edges of the strip 12.

The strips 12A, 12B then pass to positioning means 26 by way of a looping pit at 28. The positioning means 26 can move the strips 12A, 12B independently of each other. That is, one strip 12A, 12B may be advanced while the other remains at rest, or the two strips 12a,12b may be advanced at different rates. The positioning means 26 may comprise two rollers 30 mounted on a common shaft but associated with respective drive mechanisms operable to provide independent control on the rollers 30.

The shear 16 is a swinging shear which may pivot about a vertical axis at 32 in order to produce cuts at any of a range of angles passing through a cutting station indicated between lines 34. The shear 16 is sufficiently long to cut across both strips 12A, 12B at any angle within its range of movement.

The shear 16 and the drives to the rollers 30 are connected to a control mechanism 35, such as a computer, which coordinates their operation. During cutting, which will be described in more detail below, the rollers 30 advance the strips 12A, 12B to the shear 16 and holds the strips stationary while a cut is made. The length by which the strip 12A, 12B are advanced between cuts is not the same for the two strips, for reason which will be described below, and this difference is absorbed by the looping pit 28, which also provides a reservoir of strip to allow continuous de-coiling and length wise cutting of the strip 12, but discontinuous feed of the strips 12A, 12B.

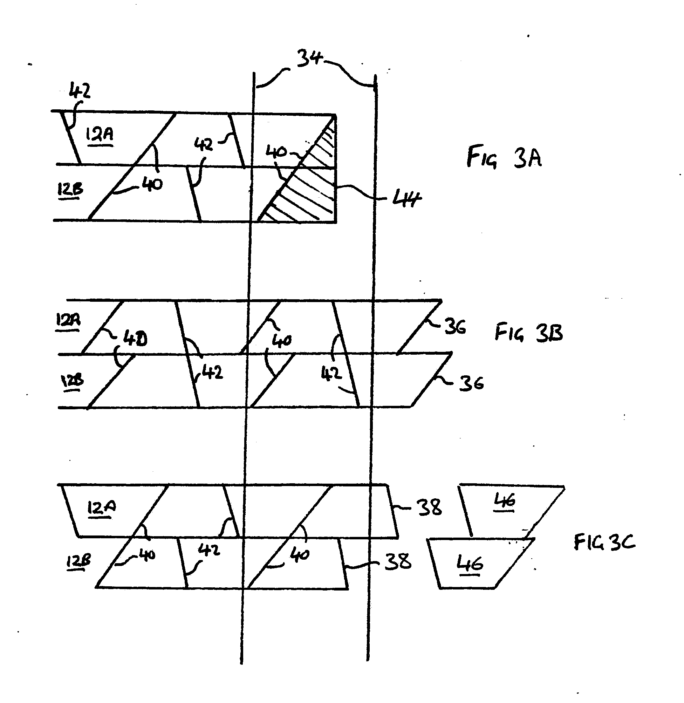

The method of operation of the apparatus 10, and in particular of the positioning means 26 and the shear 16 can be understood with reference to Fig. 3 which is a plan view of the strips 12A, 12B in the region of the cutting station 34. For clarity and simplicity, the shear 16 and the positioning means 26 have not been shown in Fig. 3.

Each blank to be cut from the strips 12A, 12B has an outline defined by two parallel sides formed by the edges of the strip 12A, 12B, and first and second cut sides 36,38. In the example shown, the sides are at different angles to the width of the strips, and the angles are to either side of the perpendicular width of the strip. However, the first and second sides could be at angles which are both to the same side of the perpendicular width and the first and second sides could be at the same angle to the perpendicular. One or both of the first and second sides could be perpendicular to the length of the strip. Thus, squares or rectangles would be cut.

In addition to first and second cut sides 36,38, the diagram of Fig. 3 also shows the paths 40,42 of sides 36,38 which are yet to be cut.

When a new coil of steel strip is threaded through the apparatus 10, it has a square leading edge 44. The strips 12A, 12B are fed to the cutting station 34 at the same speed until the leading edge 44 is at the cutting station 34, as indicated in Fig. 3A. The path 40 of the first side 36 on the strip 12A extends from the corner of the leading edge 44 back into the strip 12A, and the path 40 in the strip 12B is aligned with it. That is, the path 40 on the strip 12B is a continuation of the path 40 on the strip 12A. The paths 40 are located under the shear 16, which is swung to be aligned with them and is then operated to cut off a triangle of waste material (shown shaded). More waste material is cut from the strip 12B than from the strip 12A. This first cutting operation forms two first sides 36.

The strips 12A, 12B are then advanced through the cutting station at different rates, the strip 12B being advanced more quickly than the strip 12A. This allows the paths 42 on the strip 12B to advance with respect to the paths 42 on the strip 12A until corresponding pairs of paths 42 are aligned and the pair nearest the end of the strips 12A, 12B are located in the cutting station 34, as indicated in Fig. 3B. The different speeds of the strips 12A, 12B cause the first sides 36 to move out of alignment.

The controlling computer then swings the shear 16 round to the angle for second sides 38 and makes a cut along the paths 42 in the cutting station 34. This simultaneously forms four second sides 38. Two are on blanks 46 cut from the strips 12A, 12B and transported away (Fig. 3C) and two are at the ends of the strips 12A, 12B.

After the second cutting operation, the positioning means 26 advances the strips 12A, 12B again, with the strip 12A advancing more quickly than the strip 12B in order to bring the paths 40 back into alignment. Eventually, the next pair of paths 40 are aligned and positioned at the cutting station 34 (Fig. 3C) and the shear 16 is swung back to the angle for cutting first sides 36 and a third cut is made. This simultaneously forms four first sides 36, two on a further two blanks cut from the end of the strips, 12A, 12B, and two at the ends of the strips 12A, 12B.

After the third cutting operation, cutting continues by advancing the strips 12A, 12B to the positions, alternately, of Figs. 3B and 3C, and making a cut at each position to cut two blanks from the strips 12A, 12B.

It will be evident from the above description that many variations and modifications to the apparatus described can be made without departing from the spirit and scope of the present invention. In particular, other forms of drive and cutting means can be employed. Additional stations can be provided for treating the strip 12, if desired. The principal could be extended by cutting more than two strips simultaneously.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of cutting trapezium-shaped blanks (46) from strip material (12), each blank having two parallel sides formed by the edges of the strip, and first and second cut sides (36, 38) formed by cuts made across the strip at a side-cutting station (34), characterised in that two strips are positioned side by side for simultaneous cutting by repeatedly executing operations in which the strips are moved relative to one another and to the side-cutting station to align the paths of first cut sides on the strips and to locate the aligned paths at the side-cutting station, the two strips are cut along the aligned paths, the strips are moved relative to one another and to the side-cutting station to align the paths of second cut sides on the strips and to locate the aligned paths at the side-cutting station, and the two strips are cut along the aligned paths.

2. A method according to claim 1, characterised in that the cutting operations are performed by means of a shear (16).

3. A method according to claim 2, characterised in that the shear (16) is a swinging shear used alternately in a position in which it is parallel to the paths (40) of the first cut sides on the strips and a position in which it is parallel to the paths (42) of the second cut sides on the strips.

4. A method according to any preceding claim, characterised in that the first and second cut sides (36, 38) are not parallel.

5. A method according to any preceding claim, characterised in that the first and second cut sides (36, 38) are not perpendicular to the edges of the strip (12).

6. A method according to any preceding claim, characterised in that the movement of the strips (12) is controlled by means of a computer (35).

7. A method according to any preceding claim, characterised in that the strips (12) are formed by cutting a single strip along its length.

8. A method according to claim 7, characterised in that the single strip is cut along its length at a second cutting station (24) upstream of the side-cutting station (34).

9. A method according to claim 8, characterised in that the strips (12) are fed from the second cutting station (24) to the side-cutting station (34) through a region (28) in which the strips hang in loops, the relative sizes of the loops being variable to accommodate relative movement between the strips at the side-cutting station.

10. A method according to any preceding claim, characterised in that two strips (12A, 12B) are cut side by side at the side-cutting station (34).

11. A method according to any preceding claim, characterised in that the strip of material (12) is steel strip.

12. Apparatus (10) for cutting trapezium-shaped blanks (46) from strip material (12), each blank having two parallel sides formed by edges of the strip, and first and second cut sides (36, 38) formed by cuts made across the strip at a side-cutting station (34), characterised by comprising positioning means (26) operable to move the strips (12) relative to one another and to the side-cutting station, cutting means (16) located at the side-cutting station and operable to cut across the strips simultaneously, and control means (35) operable to control the cutting and the positioning means to cause the blanks to be cut by the repeated execution of a sequence of operations in which the strips are moved relative to one another and to the side-cutting station to align the paths of first cut sides on the strips and to locate the aligned paths at the side-cutting station, the two strips are cut along the aligned paths, the strips are moved relative to one another and to the side-cutting station to align the paths of second cut sides on the strips and to locate the aligned paths at the side-cutting station, and the strips are cut along the aligned paths.

13. Apparatus according to claim 12, characterised in that the cutting means (16) comprises a shear.

14. Apparatus according to claim 13, characterised in that the shear (16) is a swinging shear, the control means (35) causing the shear to cut alternately in a position in which it is parallel to the path (40) of the first cut sides on the strips and a position in which it is parallel to the paths (42) along the second cut sides on the strip.

15. Apparatus according to any of claims 12 to 14, characterised in that the first and second cut sides (36, 38) are not parallel.

16. Apparatus according to any of claims 12 to 15, characterised in that the first and second cut sides (36, 38) are not perpendicular to the edges of the strip (12).

17. Apparatus according to any of claims 12 to 16, characterised in that the control means (35) comprises a computer.

18. Apparatus according to any of claims 12 to 17, characterised in that the apparatus (10) further comprises second cutting means (24) for forming the strips (12A, 12B) by cutting a single strip (12) along its length.

19. Apparatus according to claim 18, characterised in that the second cutting means (24) are located at a second cutting station upstream of the side-cutting station (34).

20. Apparatus according to claim 19, characterised in that the apparatus (10) further comprises a region (28) located between the second cutting station (24) and the side-cutting station (34) and in which the strips hang in loops, the relative sizes of the loops being variable to accommodate relative movement between the strips at the side-cutting station.

21. Apparatus according to any of claims 12 to 20, characterised in that the cutting means (16) cuts two strips (12A, 12B) side by side.

22. Apparatus according to any of claims 12 to 21, characterised in that the strip material (12) is steel strip.

Fig 1

Fig 2

FIG 3A

FIG 3B

FIG 3C